# EUROPÄISCHE PATENTANMELDUNG

(11) **EP 2 546 582 A2**
(43) Veröffentlichungstag der Anmeldung: **16.01.2013**
(21) Anmeldenummer: 12004919.2
(22) Anmeldetag: 02.07.2012
(51) Int. Cl.: F24J 2/46

(54) **Solaranlage**

(30) Priorität: 12.07.2011 DE 202011103319 U
(71) Anmelder: PA-ID Automation & Vermarktung GmbH, 63801 Kleinostheim (DE)
(72) Erfinder: Mayer, Erich, 63791 Karlstein (DE); Römisch, André, 97903 Collenberg (DE); Hessberger, Alban, 63755 Alzenau (DE)
(74) Vertreter: Grimm, Ekkehard

(57) **Zusammenfassung**

Die Erfindung betrifft eine Solaranlage mit mehreren Solarmodulen, wobei jedes Solarmodul eine zugeordnete Wärmetauscherstruktur aufweist und jedes Solarmodul jeweils mindestens einen Zulauf für das Wärmeträgermedium auf der Eingangsseite der Wärmetauscherstruktur und mindestens einen Ablauf für Wärmeträgermedium auf der Ausgangsseite umfasst und die Solarmodule durch einen gemeinsamen Kreislauf mit dem Wärmeträgermedium versorgt sind, die dadurch gekennzeichnet ist, dass jedes Solarmodul sowohl auf der Eingangsseite als auch auf der Ausgangsseite jeweils sowohl einen Zulauf als auch einen Ablauf aufweist, wobei der Zulauf auf der Ausgangsseite mit dem Zulauf auf der Eingangsseite des benachbarten Solarmoduls verbunden ist und der Ablauf auf der Ausgangsseite mit dem Ablauf auf der Eingangsseite des benachbarten Solarmoduls verbunden ist, und dass der Ablauf auf der Eingangsseite des ersten Solarmoduls der miteinander verbundenen Solarmodule und der Zulauf auf der Ausgangsseite des letzten Solarmoduls der verbundenen Solarmodule mit einem Stopfen verschlossen sind.

## Beschreibung

Die vorliegende Erfindung betrifft eine Solaranlage mit mehreren Solarmodulen, wobei jedes Solarmodul eine zugeordnete Wärmetauscherstruktur aufweist und jedes Solarmodul jeweils mindestens einen Zulauf für das Wärmeträgermedium auf der Eingangsseite der Wärmetauscherstruktur und mindestens einen Ablauf für Wärmeträgermedium auf der Ausgangsseite umfasst und die Solarmodule durch einen gemeinsamen Kreislauf mit dem Wärmeträgermedium versorgt sind.

Solaranlagen sind inzwischen ein fester Bestandteil der Energieversorgung. Sie haben sich insbesondere im Bereich der Dächer von privaten Häusern, aber auch im Einsatz auf großflächigen Hallendächern, durchgesetzt, nicht zuletzt auch aufgrund der staatlichen Förderungen.

Die für solche Solaranlagen verwendeten Solarmodule haben üblicherweise eine rechteckige Form mit Abmessungen von etwa 1 m x 1,65 m. Entsprechend der zur Verfügung stehenden Dachfläche wird diese mit einer Vielzahl dieser Solarmodule belegt.

Neben reinen Solarmodulen, die mit einer Photovoltaikschicht belegt sind, werden zunehmend solche eingesetzt, die eine Kühlstruktur aufweisen, um die durch die Photovoltaikschicht erzeugte Wärme abzuführen, um dadurch den Wirkungsgrad der Photovoltaikschicht zu erhöhen. Gleichzeitig kann die abgeführte Wärme genutzt werden.

Solche Solaranlagen benötigen Zuläufe und Abläufe für das Wärmeträgermedium zu und von den einzelnen Solarmodulen. Hierzu werden über die Dachfläche verteilt Rohrleitungen verlegt, an die dann der jeweilige Zu- und Ablauf jedes Solarmoduls angeschlossen wird, wodurch eine große Anzahl von Verbindungsstellen entsteht. Um eine effektive Kühlung der einzelnen Solarmodule der Solaranlage zu erreichen, sollten alle Module mit der gleichen Temperatur des Kühlmediums beaufschlagt werden, wodurch es erforderlich ist, die einzelnen Solarmodule parallel an die Kühlmittelversorgung und die Kühlmittelrückführung anzuschließen.

Der vorliegenden Erfindung liegt nun die Aufgabe zugrunde, eine Solaranlage mit mehreren Solarmodulen zu schaffen, bei der eine gleichmäßige Versorgung der einzelnen Solarmodule mit Kühlmedium gewährleistet ist, allerdings der Aufwand für die Installation der Rohrleitungen gering gehalten wird.

Gelöst wird diese Aufgabe durch eine Solaranlage mit den Merkmalen des Anspruchs 1. Eine solche Solaranlage ist aus Solarmodulen aufgebaut, wobei jedes Solarmodul sowohl auf der Eingangsseite als auch auf der Ausgangsseite jeweils sowohl einen Zulauf als auch einen Ablauf aufweist. Der Zulauf auf der Ausgangsseite wird mit dem Zulauf auf der Eingangsseite des benachbarten Solarmoduls verbunden und der Ablauf auf der Ausgangsseite wird mit dem Ablauf auf der Eingangsseite des benachbarten Solarmoduls verbunden. Der Ablauf auf der Eingangsseite des ersten Solarmoduls der miteinander verbundenen Solarmodule und der Zulauf auf der Ausgangsseite des letzten Solarmoduls der verbundenen Solarmodule sind mit einem Stopfen verschlossen. Mit einem solchen Aufbau der einzelnen Solarmodule werden sowohl die Zuläufe als auch die Abläufe innerhalb der Solarmodule geführt. Während oder nach der Montage müssen die einzelnen Solarmodule nur mit kurzen Schlauchverbindungen verbunden werden. Diese kurzen Schlauchverbindungen verbinden die Anschlüsse des einen Moduls (Zulauf und Ablauf) auf der Ausgangsseite mit den Anschlüssen des nächsten, angrenzenden Moduls (Zulauf und Ablauf) auf dessen Eingangsseite. Dadurch, dass der Ablauf auf der Eingangsseite des ersten Solarmoduls der miteinander verbundenen Solarmodule und der Zulauf auf der Ausgangsseite des letzten Solarmoduls mit einem Stopfen verschlossen sind, wird erreicht, dass das Kühlmedium mit gleicher Temperatur und ausreichendem Druck zur Durchströmung der Kühlstruktur an jedem der verbundenen Solarmodule ansteht. Weiterhin wird mit der Anordnung der Druckverlust in jedem Modul auf gleichem Niveau gehalten.

Vorzugsweise werden die Zuläufe und Abläufe der einzelnen Solarmodule mittels Steckverbindungen strömungsmäßig verbunden.

Weitere Einzelheiten und Merkmale der Erfindung ergeben sich aus der nachfolgenden Beschreibung eines Ausführungsbeispiels anhand der Zeichnungen. In der Zeichnung zeigt
- Figur 1: schematisch eine Solaranlage, die aus drei Solarmodulen zusammengesetzt ist, in einer Draufsicht, und
- Figur 2: den unteren Teil eines Solarmoduls, wie sie in Figur 1 gezeigt sind.

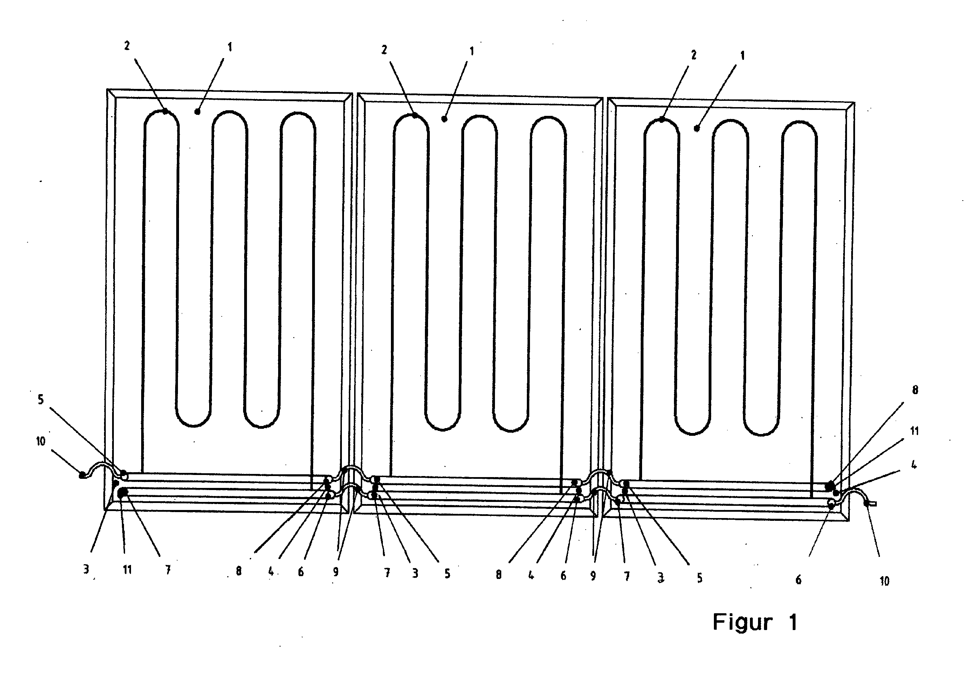

Die Solaranlage, wie sie die Figur 1 zeigt, ist aus drei Solarmodulen 1 zusammengesetzt. Jedes Solarmodul 1 besitzt eine Wärmetauscherstruktur 2, die nur schematisch als mäanderförmig verlaufendes Rohr dargestellt ist.

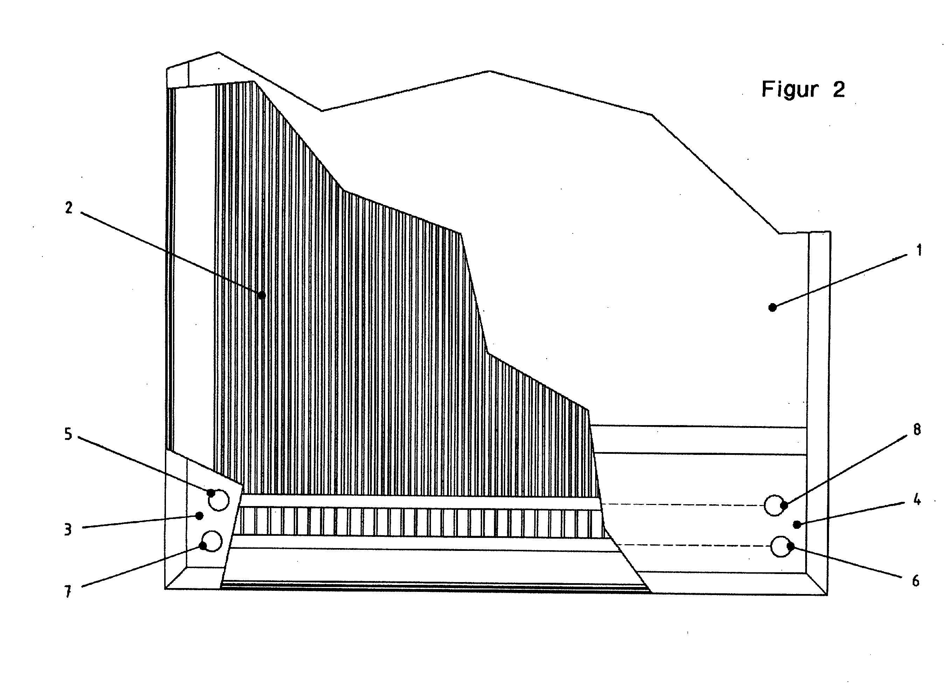

Jedes Solarmodul 1 besitzt, wie auch die Figur 2 in einer vergrößerten Darstellung zeigt, sowohl auf der Eingangsseite 3 als auch auf der Ausgangsseite 4 jeweils einen Zulauf 5, 8 und jeweils einen Ablauf 7, 6.

Das mittlere Solarmodul 1 der Solaranlage der Figur 1 ist mit steckbaren Verbindungsleitungen, beispielsweise Schlauchverbindungen 9, auf seiner Eingangsseite 3 mit der Ausgangsseite 4 und entsprechend auf seiner Ausgangsseite 4 mit der Eingangsseite 3 des nachfolgenden Solarmoduls 1 verbunden, und zwar jeweils so, dass die Zuläufe 8, 5 und die Abläufe 6, 7 verbunden sind.

Auf der Eingangsseite des ersten Solarmoduls 1 ist der Zulauf 5 mit einer ZulaufLeitung 10 einer Kühlmediumversorgung verbunden, während der Ablauf 7 auf der Eingangsseite dieses ersten Moduls mit einem Blindstopfen 11 verschlossen ist. Entsprechend ist auf der Ausgangsseite 4 des letzten Solarmoduls 1 der Figur 1, das auf der rechten Seite der Anordnung gezeigt ist, der Ablauf 6 mit einer Ablauf-Leitung verbunden, die das Kühlmittel zu der zentralen Kühlmediumversorgung zurückführt. Auf dieser Ausgangsseite 4 des letzten Solarmoduls 1 ist entsprechend der Zulauf 8 mit einem Blindstopfen 11 verschlossen.

Die Solaranlage der Figur 1 kann durch weitere Solarmodule 1 erweitert werden, die zwischen dem ersten und dem letzten Modul 1 mit entsprechenden Schlauchverbindungen 9 in die Anordnung eingebunden werden.

Eine Solaranlage, wie sie in Figur 1 gezeigt ist, bietet den Vorteil, dass die einzelnen Module mit sehr kurzen Schlauchverbindungen miteinander verbunden werden können, ohne dass dazu weitere Zu- und Ablauf-Leitungen vorgesehen werden müssen, um die einzelnen Module mit der zentralen Kühlmediumversorgung zu verbinden. Jedes Solarmodul 1 ist dazu mit den vier Anschlüssen 5, 6, 7 und 8 versehen; nur an dem ersten und dem letzten Solarmodul 1 der hintereinander angeordneten Solarmodule müssen der Ablauf 7 und der Zulauf 8 durch einen Blindstopfen 11 verschlossen werden. Durch diesen Abschluss der jeweiligen Leitung wird erreicht, dass das Kühlmedium mit gleicher Temperatur und ausreichendem Druck zur Durchströmung der Kühlstruktur an jedem der verbundenen Solarmodule ansteht. Das Kühlmedium wird so durch die Kühlstruktur zwangsgeführt.

## Patentansprüche

1. Solaranlage mit mehreren Solarmodulen (1), wobei jedes Solarmodul (1) eine zugeordnete Wärmetauscherstruktur (2) aufweist und jedes Solarmodul (1) jeweils mindestens einen Zulauf (5) für das Wärmeträgermedium auf der Eingangsseite (3) der Wärmetauscherstruktur (2) und mindestens einen Ablauf (6) für Wärmeträgermedium auf der Ausgangsseite (4) umfasst und die Solarmodule durch einen gemeinsamen Kreislauf mit dem Wärmeträgermedium versorgt sind, **dadurch gekennzeichnet, dass** jedes Solarmodul (1) sowohl auf der Eingangsseite (3) als auch auf der Ausgangsseite (4) jeweils sowohl einen Zulauf (5; 8) als auch einen Ablauf (7; 6) aufweist, wobei der Zulauf (8) auf der Ausgangsseite (4) mit dem Zulauf (5) auf der Eingangsseite (3) des benachbarten Solarmoduls (1) verbunden ist und der Ablauf (6) auf der Ausgangsseite (4) mit dem Ablauf (7) auf der Eingangsseite (3) des benachbarten Solarmoduls (1) verbunden ist, und dass der Ablauf (7) auf der Eingangsseite (3) des ersten Solarmoduls (1) der miteinander verbundenen Solarmodule (1) und der Zulauf (8) auf der Ausgangsseite (4) des letzten Solarmoduls (1) der verbundenen Solarmodule mit einem Stopfen (11) verschlossen sind.

2. Solaranlage nach Anspruch 1, **dadurch gekennzeichnet, dass** die Zuläufe (5; 8) und Abläufe (6; 7) der einzelnen Solarmodule (1) mittels steckbaren Verbindungsleitungen (9) strömungsmäßig verbunden sind.
